# EUROPEAN PATENT APPLICATION

(11) **EP 1 918 942 A1**
(43) Date of publication of application: **07.05.2008**
(21) Application number: 07254189.9
(22) Date of filing: 12.10.2007
(51) Int. Cl.: H01C 1/028, H02H 9/02

(54) **An electrical current limiter**

(30) Priority: 01.11.2006 GB 0621714
(71) Applicant: ROLLS-ROYCE PLC, London, SW1E 6AT (GB)
(72) Inventor: Sargent, Philip, Cambridge, CB1 3QJ (GB); Haslett, Mark, Cambridge, CB1 2BB (GB); Husband, Stephen Mark, Littleover Derby, DE23 2QJ (GB)
(74) Representative: Gunn, Michael Alan

(57) **Abstract**

An electrical current limiter 1 is provided in which an enclosure 3 combination incorporates an electrical conductor 2 held in effective thermal isolation within an housing 4 having a vacuum 11. In such circumstances known electrical resistivity response of the conductor 2 can be utilised when an electrical fault occurs and therefore the electrical current passing through the limiter 1 increases. The thermal mass of the enclosure 3 combination is designed to limit thermal inertia and therefore an adiabatic temperature response prior to the heating effects of the higher electrical current in the conductor 2 resulting in increased electrical resistivity/impedance and therefore limitation of electrical current.

## Description

The present invention relates to electrical current limiters and more particularly to electrical current limiters utilised with respect to electrical power networks in order to provide protection with respect to so called fault current situations.

When a fault or short circuit occurs in electrical power systems it will be appreciated a short and intense electrical current flows through that fault or short circuit. This short and intense electrical current is termed the fault current and may be in the order of twenty to fifty times the usual operational current for the electrical power system. In such circumstances it will be appreciated that a fault current can damage equipment and cabling throughout the electrical power system and therefore protection must be provided. A fault current limiter uses an inherent property of a material device in this case to limit the fault current to a much lower level and as specified by the electrical power system operator. This lower level may still be in the order of ten times the operational current but nevertheless within the capacity of safety systems within the electrical power system protecting equipment and cabling.

It will be understood faults occur when a short circuit reduces the impedance seen by an electrical power generator to a very low level. Simplistically for a constant voltage such a reduction in impedance will lead to very high electrical current using Ohm's law V=IR where V = voltage, I = current and R = resistance/impedance. Fault current limiters work by placing an increased impedance whether that be inductive, resistive or a hybrid of both, into an electrical circuit thereby reducing the impact of a short circuit.

In view of the above a number of techniques and arrangements have been devised in order to provide fault current limiters. One technique uses super conducting fault current limiters which use super conductors operating at cryogenic temperatures. Clearly, provision of such cryogens creates problems in its own right. Alternatively, non-super conducting fault current limiters are based on an air cored reactor or power electronics and/or temperature sensitive variable resistance thermistors. Such air cooled fault current limiters incur high losses, system voltage regulation difficulties and provide significantly increased weight where important. Power electronic systems require auxiliary supplies such as cooling systems and generally have insufficient reliability for critical applications. Super conducting fault current limiters are generally suitable for very high power levels but clearly suffer from initial cool down and recovery time issues and initial cost impacts at lower power levels. As will be appreciated, thermistors are semi conductive devices and are generally not capable of handling high continuous currents or voltages such that their application is only suitable to lower power applications.

In accordance with aspects of the present invention there is provided an electrical current limiter comprising an electrical conductor within a housing to provide a cryogenic surround, the electrical conductor having a known electrical impedance variation with temperature and the housing having a thermal mass to limit thermal inertia distortion of temperature changes due to electrical current flow through the electrical conductor.

Typically, the electrical conductor comprises a wire or tape or film. Generally, the electrical conductor is provided upon a former. Advantageously, the electrical conductor is wound or wrapped around the former. Generally, the former has a magnetic permeability that provides an inductive impedance in use to limit the rate of electrical current variation. Generally, the former is thermally conductive.

Typically, the electrical conductor is electrically insulated. Possibly, the electrical conductor is insulated by a varnish coating.

Generally, the electrical conductor is formed from a substantially pure metal such as aluminium.

Typically, the electrical conductor is provided within an enclosure. Generally the enclosure is formed from copper, or other thermally conducting material, e.g. aluminium. Typically, the enclosure is filled with a thermally conductive epoxy resin. Possibly, the enclosure incorporates a conductive mesh. Possibly, the thermally conductive mesh is formed from copper or aluminium.

Normally, the housing defines a vacuum vessel about the electrical conductor. Typically, the vacuum vessel envelopes the enclosure.

Generally, the enclosure is thermally coupled to a cooler to provide in use cryogenic temperatures about the electrical conductor. Typically, the housing incorporates thermal insulation. Generally, the cooler is located within the vacuum vessel.

Generally, the thermal mass of the limiter is substantially isolated by the vacuum vessel whereby temperature variation in use is dependent upon electrical current passing through the electrical conductor.

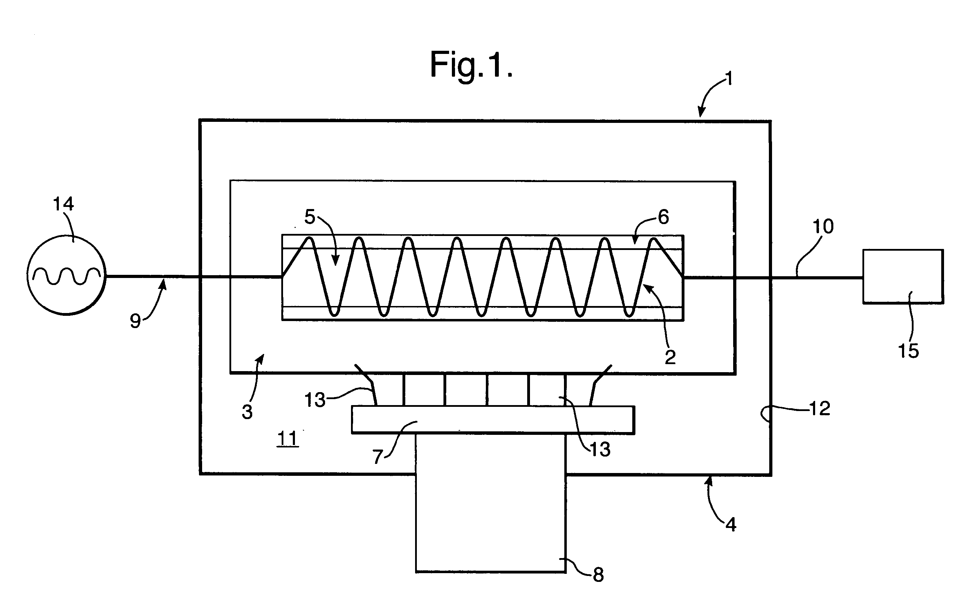

An embodiment of an electrical current limiter in accordance with aspects of the present invention will now be described by way of example and with reference to the accompanying drawing providing a schematic cross section of an electrical current limiter.

It is known that certain electrical conductors such as pure metals e.g. aluminium have a known high electrical resistivity change over temperature ranges. These electrical resistivity changes can be in the order of several thousand times between cryogenic temperatures and ambient or warm temperatures typical in power applications. For very pure aluminium resistivity changes are in the order of one million fold between 2K and 150K, that is to say between minus 271°C and minus 123°C. These variations are known properties of various electrical conductors and these changes are utilised in accordance with aspects of the present invention in order to provide an electrical current limiter.

The attached drawing provides a schematic cross section of an electrical current limiter 1 in accordance with aspects of the present invention. The limiter 1 includes an electrical conductor 2 as illustrated in the form of a wire extending across an enclosure 3 within a housing 4 which defines a vacuum vessel enveloping the enclosure 3 and conductor 2. As can be seen the electrical conductor 2 is presented on a former 5 and the enclosure 3 is filled with an appropriate thermally conductive material such as epoxy resin 6. In such circumstances it will be appreciated that the enclosure 3, resin 6, former 5 and most importantly the electrical conductor 2 are presented within the vacuum created by the housing 4 in substantial thermal isolation. Thus, a cooler 7 appropriately thermally coupled through couplings 13 to the enclosure 3 can reduce the temperature of the isolated enclosure 3 combination to cryogenic temperatures. The cooler 7 operates and is provided power through an appropriate mechanism 8.

In view of the above it will be appreciated that the isolated enclosure 3 combination acts as a thermal mass variable by the heating effect of electrical current passing through the conductor 2. In such circumstances the electrical conductor 2 is associated with electrical leads 9, 10 such that electrical current can pass through the conductor 2. The limiter 1 is coupled to an electrical power distribution system having a generator 14 attached to lead 9 and other elements including an electrical load 15 attached to lead 10. Thus, the limiter 1 acts if there is a fault 16 (shown by broken line) in the wider electrical power system.

In normal operation, that is to say when there is no electrical fault the effect of the electrical conductor 2 and the limiter 1 itself will be generally negligible and not seen by a generator 14. However, as will be described later at higher electrical currents due to an electrical short circuit fault the electrical current passing through the conductor 2 vastly increases which in turn through a square law relationship, heats the enclosure 3 combination increasing the electrical impedance of the conductor 2 and therefore inducing the limiter 1 to act as a fault current limiter in accordance with desired electrical power system protection requirements.

As indicated above the electrical conductor 2 generally takes the form of a wire but could also be a tape or film associated with the former 5. Furthermore, where possible the former 5 may be removed and the electrical conductor 2 simply arranged to pass through the enclosure 3. Such provision of an arrangement 1 without a former 5 would reduce thermal mass but, as will be described later, may result in unacceptably rapid electrical current rise within the limiter 1 such that the heating effect of the higher electrical current does not enable an appropriate electrical current limiter effect to occur and may result in electrical conductor 2 fusing. Such fusing may provide protection by increasing infinitely impedance but nevertheless would require replacement of the limiter rather than resetting.

Where the electrical conductor 2 is a wire as indicated it is advantageous if the wire is presented on a former 5 which has a magnetic permeability as well as thermally conductive. As the former 5 may also be electrically conductive it will be understood that the wire will generally be electrically insulated with a coating or layer of varnish to act as an electrical pathway in isolation rather than in combination with the former 5.

As indicated the cooler 7 will actually cool the enclosure 3 and therefore the remaining parts of the combination to cryogenic temperatures. Advantageously, this cooler 7 will utilise a dry cryogen and a highly thermally conductive enclosure 3 in the form of a hollow copper block, or hollow aluminium block or hollow block of other suitably conducting material to which the cooler 7 is connected. Copper is preferred for forming the enclosure 3 as it allows flexibility with regard to provision of the thermal mass of the combination and therefore achievement of a more responsive limiter 1 performance. It will also be understood that it is advantageous if the arrangement does not require any major replenishment of the cryogen to achieve cryogenic temperatures within the enclosure 3 and this is facilitated by the use of copper in forming that enclosure 3. It will also be understood that copper does not suffer significantly from thermal expansion changes and it does not have any relevant material phase changes.

It will be understood that the principle of the limiter 1 is based upon in normal operation the electrical conductor being held at a cryogenic temperature but should a high electrical current be drawn through the limiter 1 the enhanced heating effect of that higher electrical current will increase the resistivity of the limiter 1 and therefore provide an electrical current limiter effect. The electrical conductor is a non-superconductor. In such circumstances it is important that the enclosure 3 combination of the conductor to former 5 and enclosure 3 are all effectively a contiguous thermal mass. Such a contiguous thermal mass will therefore provide equalisation of temperature throughout the enclosure 3 combination and so effective temperature regulation of the conductor 2. In such circumstances, as described above, an appropriate thermally conductive packing or filling is provided within the enclosure 3. A convenient packaging will comprise a high thermal conductivity epoxy resin 6.

As indicated above, the electrical conductor 2 acts both as the resistance regulator within the limiter 1 as well as the heater with regard to that limiter 1 in order to create the temperature differential to vary the electrical resistivity of the electrical conductor 2. The effect of the enclosure 3 combination is to provide some thermal inertia for the limiter 1 such that the heating effects of the additional electrical current passing through the electrical conductor 2 can act proportionately to provide a resistivity change in the electrical conductor 2 to provide an electrical current limiting effect in accordance with desired aspects of the present invention. In such circumstances, the thermal mass of the combination, that is to say enclosure 3, epoxy resin 6, former 5 as well as the electrical conductor 2 will be chosen such that the inertia as a result of the specific heat capacity of the combination before temperature elevation due to the heating effect of additional current passing through the conductor 2 is limited. However, the thermal mass will also be chosen for sufficient rapidity of action to provide a current limiting effect. If the thermal mass of the enclosure 3 combination is too large, then clearly the heat energy necessary to be generated to elevate that enclosure 3 combination before whole temperature scaling will be greater. In such circumstances generally the thermal mass of the enclosure 3 combination will be such that it is sufficient to act as thermal ballast to prevent the electrical conductor 2 simply acting as an electrical fuse when the high electrical current is passed through the leads 9, 10 across the conductor 2, but sufficiently small that this thermal inertia or ballast only has short term effect and subsequent heating by the conductor 2 as a result of higher electrical current warming the enclosure 3 combination to elevate the temperature of that combination and in particular the conductor 2 in order to achieve the benefits of higher resistivity for electrical current limitation effects. Furthermore, the cooler 7 needs to be effective for monitoring the cryogenic temperature with normal in service electrical current passing through the conductor 2.

As indicated above, a housing 4 generally incorporates the enclosure 3 combination and normally the cooler 7 within a vacuum 11. Clearly, a vacuum 11 will limit heat transfer from the enclosure 3 combination and so, as indicated above, provide greater thermal isolation of the enclosure 3 combination as well as the cooler 7. By providing the cooler 7 within the vacuum 11 it will be understood that generally it will not be necessary to replenish the cryogen within the limiter 1 as the cryogenic temperature will remain low. Despite the use of a vacuum 11 it will be appreciated that typically the housing 4 will also incorporate an appropriate thermal insulation 12 to limit heat gain externally to the limiter 1.

With regard to the choice and design the limiter 1 it will be appreciated that at normal expected electrical current rates through the limiter 1 the effect of the resistance of the material from which the conductor 2 is formed should be minimised in that the power losses given by the relationship P=I²R where P = power loss, I = electrical current and R = impedance/resistivity within the limiter 1 is minimised such that the cooler 7 requirements in order to maintain cryogenic temperatures are similarly minimised. Furthermore, the electrical voltage across the limiter 1 between the leads 9, 10 should also be small preventing electrical system voltage regulation difficulties. However, upon a fault, the electrical current within the limiter 1 should be allowed to rise rapidly. This rise in electrical current above its normal rated electrical current value if unlimited may be in the order of twenty to fifty times that normal rated electrical current value. As the electrical current rises, it will be understood that the heating energy within the limiter 1 will also rise as a square of electrical current (P=I²R). This increase in temperature will also provide an increase in device resistance in accordance with the relationship V=IR.

To maximise electrical limitation and regulation it is desirable that the enclosure 3 combination temperature, and therefore through the known electrical resistivity response of the conductor 2, the resistivity of the limiter should rise rapidly particularly if utilised with respect to a direct current (dc) system. The adiabatic temperature rise of the enclosure 3 combination is limited by the specific heat capacity of the materials from which that combination is made. It is therefore part of the design specification process with regard to a limiter for utilisation in an operational situation that the mass of the device should be minimised in comparison with the expected operational requirements. In such circumstances, as indicated above, typically the electrical conductor 2 will take the form of a fine wire or tape or film.

The initial adiabatic temperature rise, as indicated above, is a product of the thermal mass of the enclosure 3 combination and one effect is a thermal inertia before rise in the combination temperature being purely dependent upon thermal mass of a component and its thermal conduction. Thermal conductivity from the electrical conductor 2 to the cooler 7 is minimised in order to reduce temperature differentials. This minimisation is achieved through the vacuum 11 and limited thermal conduction pathways or couplings 13 between the cooler 7 and the enclosure 3.

It will also be understood, in addition to the advantages of a low thermal mass providing rapidity of response that effective re-setting of the limiter 1 is also facilitated by a low thermal mass. It will be understood once the electrical fault is removed and therefore the electrical current passing through the limiter 1 is also reduced, the effect of the cooler 7 will or may be to return the enclosure 3 combination to the cryogenic temperature which results in a resistivity/impedance for the electrical conductor which is minimised as seen by an electrical power generator on electrical systems. This resetting of the limiter 1 will thus occur upon removal of the electrical fault. Furthermore, on initial set up by provision of a low thermal mass it will be understood that the cooler 7 will present the limiter at its normal working cryogenic temperature in a much shorter time.

In most instances, and without some form of electrical current regulation, it will be understood that electrical fault currents will rise very rapidly particularly for direct current (dc) systems. In such circumstances it is advantageous to reduce the rate of electrical current rise to enable the conductor 2 to heat to the desired temperature as a result of the thermal mass created by the enclosure 3 combination. The rate of rise of electrical current can be limited by employing conductive winding effects. In such circumstances it is advantageous if the electrical conductor 2, as depicted in the drawings, is wound around a former 5 which has a magnetic permeability. Typically, the former 5 will be made from iron in order to provide sufficient electrical inductance to limit the rate of rise of electrical current whilst allowing the enclosure 3 combination to rise in temperature.

In terms of ongoing operability with regard to a limiter 1 in accordance with aspects of the present invention, it will be appreciated that effects of a failure of the limiter 1 will be substantially benign. Should the cryogenic cooler 7 or other system fail such that the operating temperature of the limiter 1 is then determined purely by remaining cooling and thermal mass of the limiter 1, it will be understood with a low electrical current passing through the conductor 2 there will be limited heating effect and therefore the electrical resistivity of the conductor 2 will similarly be low in accordance with the known electrical resistivity response of the conductor 2 at least in the short term. In such circumstances, it is possible that the limiter 1 could continue to operate although at an elevated temperature for a period of time until appropriate maintenance, repair or replacement, the primary operating constraint as will be understood will be the voltage drop across the limiter 1. Furthermore, should the electrical conductor 2 fail by getting too hot or fretting/fusing, then the limiter 1 would again fail by providing an open circuit and therefore acting as a circuit breaker within an electrical system.

Modifications and alterations to the above embodiment of aspects of the present invention will be understood by those skilled in the art. Thus, as indicated, the electrical conductor 2 may take the form of a wire or tape or film presented on an appropriate former. If that former is not electrically conductive then the necessity for insulation is removed and therefore it may not be necessary to provide an insulating varnish or coating on the electrical conductor 2. In some situations the electrical conductor may be formed from a multiplicity of wires and this may have particular advantages in high current electrical systems. The inductive nature of the electrical conductor may be designed to be substantially lossy in terms of creating rapid heating of the electrical conductor 2 and therefore create a more responsive electrical current limiter 1 in accordance with aspects of the present invention. In order to improve homogeneity within the enclosure combination for thermal equalisation as indicated above generally the enclosure 3 will be packed with an appropriately high thermally conductive material. In order to enhance that thermal conductivity a mesh or an aluminium mesh such as a copper mesh may be incorporated within the enclosure 3 prior to insertion of the epoxy 6 to reduce the amount of epoxy used and also normally improve thermal conductivity through the enclosure 3 combination. Generally, the enclosure 3 will be formed from plates appropriately secured and machined to define a combination with the electrical conductor 2 and other components of the limiter 1.

The electrical conductor 2 is a substantially pure metal, for example aluminium, but other suitable metals may be used. If they have a large vanation in electrical impedance with temperature.

## Claims

1. An electrical current limiter (1) comprising an electrical conductor (2) within a housing (4) to provide a cryogenic surround, the electrical conductor having a known electrical impedance variation with temperature and the housing having a thermal mass to limit thermal inertia distortion of temperature changes due to electrical current flow through the electrical conductor.

2. A limiter as claimed in claim 1 wherein the electrical conductor (2) comprises a wire, a tape or a film.

3. A limiter as claimed in claim 1 or claim 2 wherein the electrical conductor (2) is provided upon a former (5).

4. A limiter as claimed in claim 3 wherein the electrical conductor (2) is wound or wrapped around the former (5).

5. A limiter as claimed in claim 3 or claim 4 wherein the former (5) is has a magnetic permeability to provide an inductive impedance in use to limit the rate of electrical current variation.

6. A limiter as claimed in any of claims 3 to 5 wherein the former (5) is thermally conductive.

7. A limiter as claimed in any preceding claim wherein the electrical conductor (2) is electrically insulated.

8. A limiter as claimed in claim 7 wherein the electrical conductor (2) is insulated by a varnish coating.

9. A limiter as claimed in any preceding claim wherein the electrical conductor (2) is formed from a substantially pure metal.

10. A limiter as claimed in claim 9 wherein the pure metal is aluminium.

11. A limiter as claimed in any preceding claim wherein the electrical conductor (2) is provided within an enclosure (3).

12. A limiter as claimed in claim 11 wherein the enclosure (3) is formed from copper or other thermally conducting material.

13. A limiter as claimed in claim 11 or claim 12 wherein the enclosure (3) is filled with a thermally conductive epoxy resin (6).

14. A limiter as claimed in any of claims 11 to 13 wherein the enclosure (3) incorporates a conductive mesh.

15. A limiter as claimed in claim 14 wherein the thermally conductive mesh is formed from copper or aluminium.

16. A limiter as claimed in any preceding claim wherein the housing (4) defines a vacuum vessel and the vacuum vessel envelopes the electrical conductor (2).

17. A limiter as claimed in any of claims 11 to 15 wherein the housing (4) defines a vacuum vessel and the vacuum vessel envelopes the enclosure (3).

18. A limiter as claimed in claim 17 wherein the enclosure (3) is thermally coupled to a cooler (7) to provide in use cryogenic temperatures about the electrical conductor (2).

19. A limiter as claimed in claim 18 wherein the cooler (7) is located within the vacuum vessel.

20. A limiter as claimed in any preceding claim wherein the housing (4) incorporates thermal insulation.

21. A limiter as claimed in any preceding claim wherein the thermal mass of the limiter (1) is substantially isolated by the housing (4) whereby temperature variation in use is dependent upon electrical current passing through the electrical conductor (2).

22. A limiter as claimed in any preceding claim wherein the electrical conductor (2) is a non-superconductor.

23. An electrical power system incorporating an electrical current limiter as claimed in any preceding claim.
